# EUROPEAN PATENT APPLICATION

(11) **EP 4 421 153 A1**
(43) Date of publication of application: **28.08.2024**
(21) Application number: 23158498.8
(22) Date of filing: 24.02.2023
(51) Int. Cl.: C10M 103/06, F16D 69/00, C10M 103/04, C04B 41/00, C10N 30/06, C10N 30/00, C10N 40/04, C10N 50/08

(54) **LUBRICANT**

(71) Applicant: Tribotecc GmbH, 9601 Arnoldstein (AT)
(72) Inventor: Hensgen, Lars, 9601 Arnoldstein (AT); Pavone, Michele, 9601 Arnoldstein (AT); Bartlmä, Jürgen, 9601 Arnoldstein (AT); Gritschacher, Wolfgang, 9601 Arnoldstein (AT); Hofmann, Fabian, 9601 Arnoldstein (AT); Schrittesser, Rudolf, 9601 Arnoldstein (AT); Kienleitner, Herbert, 9601 Arnoldstein (AT)
(74) Representative: Schwarz & Partner Patentanwälte GmbH

(57) **Abstract**

The present invention relates to use of a composition of formula I

Fe₂₋ₐZnₐS₂ I

wherein a is a number within the range of 0.2 ≤ a ≤ 1.8, and
b is a number within the range of 1.8 ≤ b ≤ 2.2, preferably within the range of 1.9 ≤ b ≤ 2.1, most preferably b=2,
said composition containing at least one mixed crystalline phase of Fe, Zn and S, as a lubricant.

## Description

### Field of the invention

The present invention relates to a composition and the use thereof as a lubricant.

### Background of the invention

Metal sulfides act as functional additives for friction linings. Their tribological properties are crucial to the functionality of friction pairing, enhance the performance and extend the lifetime of components in motion. Braking effects should be immediate and smooth, without generating noises or and vibration.

In current applications, most solid lubricants are applied as thin solid films on sliding surfaces on various kinds of substrates, including metallic, ceramic or organic materials. For instance, solid lubricants are often applied to friction materials used for commercial automotive brake pads that are mainly made of the family of non-asbestos organic (NAO) formulation. Such NAO formulations usually consist of a resin matrix, various types of fibers, filler components, as well as friction and wear modifiers and can further include small amount of metallic constituents.

In particular, metallic friction materials can be classified into full-metallic, low-metallic, and semi-metallic formulations.

Full-metallic materials are used, for example, in racing vehicles and are composed of sintered steel without any synthetic additives. For instance, full-metallic braking pads are long-lasting but require more force to slow a vehicle while wearing off the rotors faster.

Low-metallic formulations are considered durable and cost-effective compared to full-metallic pads as they only contain 10-30% metal. These materials are popular because they are harder than organic pads and produce less dust and noise than their semi-metallic alternatives.

Semi-metallic materials contain 30-65% metal - usually chopped steel wire, iron powder, copper or a blend of graphite and inorganic fillers. However, semi-metallic formulations do not perform at the same level at cooler temperatures as ceramic or low metallic formulations.

Ceramic formulations comprise oxides, carbides, borides, non-ferrous metals and fibers. Ceramic materials are very robust which makes them ideal for high-performance vehicles, especially as they produce less dust than other brake pad types. These formulations offer excellent braking benefits but are usually considered expensive.

Another example refers to hybrid materials consisting of a combination of both low-metallic and NAO formulations that are also used as friction materials.

Generally, the purpose of using solid lubricants in friction linings is not the reduction of friction but rather the stabilization of the frictional behavior in relation to time, resulting in the reduction of abrasive processes and in a positive effect on wear and vibration characteristics.

In particular, the stabilization of the Coefficient of Friction (CoF) results in a suppression of the detrimental dependence of the CoF and thus of braking efficiency on temperature, pressure load, and speed to a major extent.

Therefore, solid lubricants have proven effective in increasing the performance of brakes in terms of providing friction stability and reducing wear at elevated temperatures without impairing the frictional performance and minimizing noise, vibration, and harshness (NVH).

Various solid lubricants are currently used, wherein graphite and molybdenum disulfide (MoS₂) are the most common solid lubricants.

MoS₂ has long been known as a solid lubricant for the formation of a solid lubricant film between surfaces intended to glide with regard to each other. MoS₂ and other metal sulfides are also used as components of gliding compositions consisting e.g., primarily of polytetrafluoroethylene (PTFE), i.e. for instance plain bearing half liners or slide bushings, in order to reduce surface friction.

Metal sulfides are used as solid lubricants in different fields, namely in the production of friction elements, such as brake blocks, brake shoes, brake and clutch linings, the purpose of which is not the prevention of friction but the generation of friction.

Also, tin sulfides (SnS and SnS₂) are considered as an alternative to other metal sulfides but are usually associated with high costs.

In particular, it is known that a number of bi-metal and tri-metal sulfides, when used as solid lubricants, give good performance results in comparison to single-metal sulfide mixtures of analogous composition.

For example, US 5958846 describes a solid lubricant, in particular for friction linings, based on metal sulfides comprising different bi-metal and tri-metal sulfides such as e.g., Cu₂FeSnS₄, Cu₂FeSn₃S₈, Cu₃SnS₄, Mn₂SnS₄, SnFe₂S₄ or Cu₂TiS₂.

WO 95/25231 discloses an additive to friction lining mixtures characterized that the additive consists of a mixture of iron-sulfide with a sulfide of molybdenum and/or of zinc and/or of antimony and/or of tungsten and/or titanium.

A known product "SLX 121" as manufactured by Tribotecc^{®}, is a solid lubricant based on Bi, Fe and Zn sulfides. The lubricant can be used for disc brake pads, high performance friction linings and clutch facings to improve pad and disc wear, either used alone or in combination with other solid lubricants. The product is characterized by having a typical density of 4.7 g/cm³, a typical sieve residue (45 µm) of 9%, and a typical volatile matter (at 105°C) of 0.1%. This product shows no mixed crystalline phase of Fe, Zn and S.

It turned out, when using certain metalsulfides as a solid lubricant, metal pick-up (MPU) is often observed. MPU is a problematic phenomenon in automotive disc brakes. MPU generally forms metal lumps on the surface of the brake pad. If brake pads have MPU, during breaking, they would cause grooving of the disc rotor, generating braking noise and deteriorating the break performance. MPU is a phenomenon dependent on many factors, such as climate, general road conditions etc. and, thus, not easily quantifiable.

In addition, it must be possible to manufacture such friction linings industrially at a reasonable cost.

For many years there have been attempts to produce synergistic mixtures having extraordinary effects by combining various solid lubricants. However, these combinations have so far not been successful in achieving an effect that is satisfactory in every respect in terms of performance.

In addition, the ingredients of solid lubricants as disclosed in the state of the art, in particular Sn-based sulfides, are associated to elevated costs resulting in high production costs of friction materials for manufacturers and expensive products for end users.

### Short Description of the Invention

The compositions disclosed in the state-of-the-art do not fulfill all the requirements of brake performance, wear properties, MPU-behavior and costs. Therefore, the aim of the present invention is to provide a novel kind of solid lubricants, which has better friction and wear properties and consists less expensive raw materials compared to the state-of-the-art materials.

The object of the present invention is solved by the use of a composition of formula I

Fe₂₋ₐZnₐS_{b} I

wherein a is a number within the range of 0.2 ≤ a ≤ 1.8, and
b is a number within the range of 1.8 ≤ b ≤ 2.2, preferably within the range of 1.9 ≤ b ≤ 2.1, most preferably b=2,
said composition containing at least one mixed crystalline phase of Fe, Zn and S
as a lubricant.

Furthermore, the object of the invention is solved by a composition of formula I

Fe₂₋ₐZnₐS_{b} I

wherein a is a number within the range of 0.2 ≤ a ≤ 1.8, and
b is a number within the range of 1.8 ≤ b ≤ 2.2, preferably within the range of 1.9 ≤ b ≤ 2.1, most preferably b=2,
said composition containing at least two different mixed crystalline phases of Fe, Zn and S.

Finally, the present invention relates to a process for producing the compositions disclosed herein.

Preferred embodiments of the present invention are defined in the dependent claims.

### Short Description of the Figures

Fig. 1a shows simplified AK-Master test results of the compositions according to Example 1 and Comparative Example 1.
Fig. 1b shows the pad wear test results of the compositions according to Example 1 and Comparative Example 1.
Fig. 1c shows the disc wear test results of the compositions according to Example 1 and Comparative Example 1.
Fig. 2a shows simplified AK-Master test results of the compositions according to Example 1 and Comparative Example 2.
Fig. 2b shows the pad wear test results of the compositions according to Example 1 and Comparative Example 2.
Fig. 2c shows the disc wear test results of the compositions according to Example 1 and Comparative Example 2.
Fig. 3a shows simplified AK-Master test results of the compositions according to Example 1 and Comparative Example 3.
Fig. 3b shows the pad wear test results of the compositions according to Example 1 and Comparative Example 3.
Fig. 3c shows the disc wear test results of the compositions according to Example 1 and Comparative Example 3.
Fig. 4a shows simplified AK-Master test results of the compositions according to Example 1 and Comparative Example 4.
Fig. 4b shows the pad wear test results of the compositions according to Example 1 and Comparative Example 4.
Fig. 4c shows the disc wear test results of the compositions according to Example 1 and Comparative Example 4.
Fig. 5a shows simplified AK-Master test results of the compositions according to Example 1 and Comparative Example 5.
Fig. 5b shows the pad wear test results of the compositions according to Example 1 and Comparative Example 5.
Fig. 5c shows the disc wear test results of the compositions according to Example 1 and Comparative Example 5.
Fig. 6 shows XRD spectra of the composition according to Example 1 of the present invention.
Fig. 7 shows peaks relating to crystalline phases from XRD database including the crystalline phases of the composition according to Example 1.
Fig. 8 shows XRD spectra of the composition according to Example 2 of the present invention.
Fig. 9 shows peaks relating to crystalline phases from XRD database including the crystalline phases of the composition according to Example 2.
Fig. 10 shows XRD spectra of the composition according to Example 3 of the present invention.
Fig. 11 shows peaks relating to crystalline phases from XRD database including the crystalline phases of the composition according to Example 3.
Fig. 12 shows XRD spectra of the composition according to the Comparative Example 5.
Fig. 13 shows peaks relating to crystalline phases from XRD database including the crystalline phases of the composition according to Comparative Example 5.
Fig. 14a shows the average Coefficient of Friction (µ) of the compositions according to Example 1 and Comparative Example 1 up to a temperature of 500°C determined by a block wear test.
Fig. 14b shows the pad wear of the compositions according to Example 1 and Comparative Example 1 up to a temperature of 500°C determined by a block wear test.
Fig. 14c shows the disc wear of the compositions according to Example 1 and Comparative Example 1 up to a temperature of 500°C determined by a block wear test.

### Detailed Description of the Invention

It was surprisingly found that compositions according to formula I are useful as a lubricant. The lubricant according to the invention shows lower wear and better MPU-properties compared to the state-of-the-art tin-based lubricants or other bi-metal sulfides or multi metal sulfides. It was also found that costly Sn-based lubricants can be substituted by the composition according to the invention.

In particular, brake pads produced with NAO formulations comprising the composition of the present invention show lower pad - and disc wear in brake systems than tin-based materials, bi-metal sulfides and multi metal sulfides, even at high operating temperatures above 300°C.

Also, brake pads with the compositions of the present invention in preliminary analyses under comparable conditions were shown to be more stable against MPU in contrast to other Fe-based sulfides. These effects further minimize braking noise and enhance brake performance. Surprisingly it was also found that the composition of the present invention leads to a stabilization of the CoF, which results in a reduction of abrasive processes and has positive effects on wear characteristics.

The composition of the present invention, therefore, shows highly desirable properties to improve the energy efficiency during braking and components lifetime as well as good comfort properties.

Additionally, the composition of the present invention may be characterized by a significantly lower price compared to Sn-based compositions.

"Composition", as used herein, means a combination of at least two ingredients which are chemically bonded to each other.

The term "mixture", as used herein, refers to a material made up of at least two ingredients which are not chemically bonded to each other, so that each ingredient substance retains its own chemical properties and makeup. A mixture relates to a physical combination of ingredients in which the identities are mixed in the form of powders, solutions, suspensions, or colloids.

The term "mixed crystalline phase" means a crystalline phase of a mixture of at least 2 cationic metals (Fe and Zn) and one anionic element (S).

The presence of a crystalline phase is detectable via XRD analysis (as disclosed further below) and comparing the pattern obtained with patterns of known crystalline phases containing the elements at question.

The composition used according to the present invention is of formula I

Fe₂₋ₐZnₐS_{b} I.

"a" means the molar ratio of Zn in the overall composition.
"b" means the molar ratio of S in the overall composition.

Without wishing to be bound by theory, the observed effects on brake performance of the composition according to the present invention might be attributed to the presence of at least one crystalline mixed phase of Fe, Zn and S in the composition. Said at least one crystalline mixed phase may have a composition different from that of the overall composition.

The presence of such a crystalline mixed phase can be confirmed by XRD (X-ray diffraction) measurements. XRD measurements were carried out by using a PANalytical X'Pert PRO powder diffractometer with CuK_{α} radiation and proportional counter.

According to one embodiment of the present invention, the composition used according to the invention is characterized in that a is a number within the range of 0.4 ≤ a ≤ 1.6, preferably within the range of 0.6 ≤ a ≤ 1.4.

According to another embodiment of the present invention, the composition used according to the present invention is characterized by containing at least two different crystalline phases of Fe, Zn and S.

It is believed that the presence of more than one mixed crystalline phase of Fe, Zn and S further contributes to the effect of the composition used according to the present invention.

In a preferred embodiment, the composition comprises hexagonal and cubic phases in the crystal phase. The crystal phases and the weight ratios of the hexagonal and cubic phases in the crystal phases of the body of the present invention can, again, be determined by XRD measurements.

Preferably, the composition used according to the present invention is characterized in that the composition contains a cubic crystalline phase of Fe, Zn and S, a hexagonal crystalline phase of Fe, Zn and S, or both.

The phases may be characterized by a different stoichiometry and different arrangement of molecules in the solid.

One example for a cubic crystalline phase of Fe, Zn and S is Sphalerite, where Fe is incorporated (Fe-rich Sphalerite). These Sphalerites can have different formulas, e.g. Fe_{0.34}Zn_{0.66}S or Fe_{0.372}Zn_{0.628}S. One example for a hexagonal crystalline phase of Fe, Zn and S is a hexagonal crystalline phase of formula Fe_{0.33}Zn_{0.67}S.

In another preferred embodiment of the present invention, the composition used according to the invention contains in addition at least one crystalline phase selected from the group consisting of iron sulfides and mixtures thereof.

The iron sulfide phase may be of formula FeS, e.g. like a crystalline phase of Troilite.

Furthermore, the iron sulfide phase may be a composition of formular II

FeₓS_{y} II

wherein x is a number within the range of 0.8 ≤ x ≤ 3, preferably within the range of 1 ≤ x ≤ 3 and y is a number within the range of 1 ≤ y ≤ 4.

Preferably, the iron sulfide phase of the present invention is a Troilite. Troilite is an iron sulfide mineral with the formula of FeS showing good thermal conductivity.

According to another preferred embodiment of the present invention the composition used according to the present invention is characterized by having the following composition:

Fe_{1.4}Zn_{0.6}S₂

Fe_{1,05}Zn_{0,95}S₂

Fe_{0.64}Zn_{1.36}S₂,

or by being a mixture of one or more of the compositions above.

To enhance the reduction of friction and wear, additives can be added to the composition used according to the present invention. Additives can particularly be important in the boundary lubrication regime, where they can prevent solid surfaces from coming into direct contact, substantially reducing friction and wear. Several classes of additives exist, the main examples being organic friction modifiers, oil-soluble additives, functionalized polymers, and dispersed nanoparticles.

Preferably, the composition is present together with one or more additives selected from the group consisting of fluorides, such as CaF₂, MgO, and CaSO₃.

According to another embodiment of the present invention composition used according to the invention is present together with one or more other lubricants, such as phosphates, such as Tricalciumphosphate (TCP), graphite or other metal sulfides.

Preferably, the one or more additive or lubricant can be added to the composition after synthesis of the composition.

The composition of the present invention is especially useful as lubricant in friction linings, preferably in brake linings and/or clutch linings.

Preferably, the composition of the present invention is a solid lubricant.

As example, the composition of the present invention can be used in automobiles. Mention may be made of engine peripherals such as constant velocity joints, wheel bearings and clutches, and various components such as electric power steering, ball joints, door hinges, handle parts and cooling fans. Furthermore, the composition of the present invention can also be used as lubricant for plastic compartments in e.g., vehicles.

Another aspect of the present invention relates to a composition of formula I

Fe₂₋ₐZnₐS_{b} I

wherein a is a number within the range of 0.2 ≤ a ≤ 1.8, and
b is a number within the range of 1.8 ≤ b ≤ 2.2, preferably within the range of 1.9 ≤ b ≤ 2.1, most preferably b=2,
said composition containing at least two different mixed crystalline phases of Fe, Zn and S.

Again, "a" refers to the molar ratio of the element Zn in the overall composition and "b" refers to the molar ratio of Sulphur (S) in the overall composition.

Compositions of formula I having two different mixed crystalline phases of Fe, Zn and S have not been described previously.

According to a preferred embodiment of this aspect of the present invention the composition is characterized in that the composition contains both a cubic crystalline phase of Fe, Zn and S, and a hexagonal crystalline phase of Fe, Zn and S.

A process for producing a composition used as defined above or a composition as defined above, comprises the steps of:
- mixing Fe, Zn and S in elemental form in the desired ratio to obtain the mixture of formula I, and
- thermally synthesizing said mixture under vacuum.

The raw materials and/or the obtained mixture can be optionally milled or ground before thermally synthesizing said mixture.

"Thermal synthesis", as used herein, is performed under exclusion of oxygen in vacuum for the preparation of the compositions according to the present invention in analogy to the thermal synthesis route described in *Piontek et al. ACS Catalysis, 2018, 8, 987-996.*

In particular, the composition of the present invention can be produced comprising the steps of:
a) Preparing a homogeneous mixture of Fe-powder, Zn-powder and S-powder by mixing or grinding. The average particle size of the final mixture is preferably below 100 µm.
b) Transferring the mixture obtained in step a) to a closed vessel under vacuum, wherein the vacuum is adjusted to a range of 30 mbar to 10⁻¹⁵ mbar, preferably 1 mbar to 10⁻⁷ mbar.
c) Heating up the closed vessels to a temperature range of 400 to 1500°C, and holding for 1 to 120 hours, preferably 700° to 1200°C for 3 to 15h, more preferably with two temperature ramps, the first ramp from 600 to 800°C for 1 to 10h and a second ramp from 900 to 1 100°C for 1 to 20h.

The term "average particle size" as used herein refers to the d₅₀ value as determined from the particle size distribution. The d₅₀ value is known as median diameter or medium value of the particle size distribution, being determined from a volume based representation (dv₅₀) or from a number based representation (dn₅₀). In the present application, the d₅₀ value refers to the volume based representation, i.e. the particle diameter at 50 vol% in the cumulative distribution (e.g. a d₅₀ of 100 µm means that 50 vol% of the particles have a smaller diameter than 100 µm).

Preferably, the particle size distribution is preferably determined using laser diffraction particle analysis, preferably using a "Microtrac" particle analyser, such as a Microtrac S3500 or a Microtrac X100 instrument, employing the Fraunhofer analysis mode (measurement mode: full range analysis (FRA) of absorbing particles).

Other instruments showing a sensitivity and measurement range comparable to the Microtrac S3500 or Microtrac X100, in particular a comparable lower limit of the detectable particle size and a comparable sensitivity in the lower size region, may be employed to determine the particle size distribution according to the present invention. The skilled person is aware of suitable instruments on the market.

The mixture as described herein can be ground until the desired average particle size (d₅₀) is obtained.

The present invention is explained in more detail in the following examples and comparative examples, without being limited thereto.

### Examples

### Example 1

Iron powder (0.89 g, Sigma-Aldrich, ≥99%), zinc powder (0.40 g, Sigma-Aldrich, ≥99%) and sulfur (0.71 g, Sigma-Aldrich, 99.5%-100.5%) with an average particle size of smaller than 100 µm, respectively, were mixed together until a homogenous conglomerate of the elements was obtained. The homogenous mixture of the elements was filled into a quartz ampule (10 mm diameter, total volume: 15 mL) that was evacuated at a pressure below 4^{∗}10⁻² mbar for 16 hours and was then sealed under vacuum. The sample was placed in an oven and heated to 700°C with a heating rate of 4.5 K min⁻¹. After holding the temperature isotherm for 3 hours to let the sulfur react with the metal mixture without damaging the vessel, the temperature was raised to 1000°C (at a heating rate 3.33 K min⁻¹) to increase the diffusion. Then, the sample was kept at this temperature for 10 hours. Afterwards the sample was allowed to cool to room temperature.

### Example 2

Iron powder (0.63 g, Sigma-Aldrich, ≥99%), zinc powder (0.67 g, Sigma-Aldrich, ≥99%) and sulfur (0.69 g, Sigma-Aldrich, 99.5%-100.5%) were mixed together until a homogenous conglomerate of the elements was obtained. The composition was obtained with the same method as described in Example 1.

### Example 3

Iron powder (0.38 g, Sigma-Aldrich, ≥99%), zinc powder (0.94 g, Sigma-Aldrich, ≥99%) and sulfur (0.68 g, Sigma-Aldrich, 99.5%-100.5%) were mixed together until a homogenous conglomerate of the elements was obtained. The composition was obtained with the same method as described in Example 1.

### Example 4

1.8 g Fe_{1,4}Zn_{0,6}S₂ and 0.2 g Graphite (SBL/ Kaiserberg) were mixed together until a homogenous conglomerate of the materials was obtained. The composition was obtained with the same method as described in Example 1.

### Example 5

1.8 g Fe_{1,4}Zn_{0,6}S₂ and 0.2 g tricalciumphosphate (TCP; Chemische Fabrik Budenheim KG) were mixed together until a homogenous conglomerate of the materials was obtained. The composition was obtained with the same method as described in Example 1.

### Comparative Example 1

A commercially available solid lubricant containing pure SnS was used to compare the performance of the present inventive suspension.

### Comparative Example 2

A commercially available solid lubricant containing pure FeS was used to compare the performance of the present inventive suspension.

### Comparative Example 3

A commercially available solid lubricant containing pure ZnS was used to compare the performance of the present inventive suspension.

### Comparative Example 4

1.4 g of the powder of Comparative Example 2 and 0.6 g of the powder of Comparative Example 3 were mixed together until a homogenous conglomerate of the materials was obtained.

### Comparative Example 5

A commercially available solid lubricant ("Tribotecc SLX 121") containing Fe_{0.6}Zn_{0.22}Bi_{0.12}S with no further ingredients was used to compare the performance of the present inventive suspension.

**Table 1: Overview of the Examples according to the invention and Comparative Examples, as described herein with respective compositions used.**

| **Example No.** | **Composition** |
|---|---|
| Example 1 | Fe_{1.4}Zn_{0.6}S₂ |
| Example 2 | Fe_{1.05}Zn_{0.95}S₂ |
| Example 3 | Fe_{0.64}Zn_{1.36}S₂ |
| Example 4 | Fe_{1.4}Zn_{0.6}S₂ + Graphite |
| Example 5 | Fe_{1.4}Zn_{0.6}S₂ + TCP |
| Comparative Example 1 | SnS |
| Comparative Example 2 | FeS |
| Comparative Example 3 | ZnS |
| Comparative Example 4 | FeS + ZnS |
| Comparative Example 5 | Fe_{0.6}Zn_{0.22}Bi_{0.12}S |

### Testing conditions

The Examples and Comparative Examples were incorporated into a common NAO formulation (see Tables 2 and 3), and brake pads in the same dimension like commercial available brake pads were pressed (see Table 4). A press of a type LCM-1-090D, producer: IAG was used, with 140 g of the final formulation at a temperature of 150°C, a pressing force of 3.0 kN/cm², hydraulic pressure of 44 bar and a contact pressure of 132.51 kN.

**Table 2: NAO formulation.**

| **Material** | **Concentration %w/w** |
|---|---|
| Binder | 7 |
| Fibers | 16 |
| *Mineral, aramide, wollastonite* | |
| Fillers | 33 |
| *friction dust, baryte, potassium titanate* | |
| Abrasive | 17 |
| *Al₂O₃, ZrO₂, Fe₂O₃* | |
| Friction modifiers | 21 |
| *Graphite and petrol cokes, Aluminium powder* | |
| (Comp.) Examples | 6 |

**Table 3: Raw materials of the NOA formulation (Product Name/Producer).**

| **Raw Material** | **Weight %** |
|---|---|
| Kevlar 6F 651 / DuPont | 3.3 |
| C 11 / Sachtleben | 13.1 |
| Martoxid PN 202 / Omya | 4.8 |
| Mangesia Usta schwer / Lehmann & Voss | 4.3 |
| Baymod N XL 38.43 /Lanxess | 1.8 |
| PF 0222SP 06 / Bakelit AG | 5.3 |
| Friction Dust 6032 / Came | 2.1 |
| Roxul 1000, RB 220 / Lapinus | 8.4 |
| Ultrafine 2 / Nyco | 3.4 |
| Bayferrox 306 / ES-Linz | 5.8 |
| Triton 60 / Miihlendorfer Kreidefabrik | 3.2 |
| PT FR / Tam Ceramics | 20.4 |
| SBL / Kaiserberg | 3.7 |
| M 25390 / Kaiserberg | 3.7 |
| PK-MM / Kaiserberg | 6.4 |
| Z99 3-5µm / Imerys | 7.4 |
| AS 99,7%, <125µm / Ecka | 1.5 |
| Stax 205 / Deutsches Metallfaser Werk | 1.5 |

The formulation was treated in a sequence of press and ventilation steps as per the following Table 4:

**Table 4: Procedure of press and ventilation.**

| | |
|---|---|
| press | 15 sec |
| ventilate | 15 sec |
| press | 15 sec |
| ventilate | 15 sec |
| press | 20 sec |
| ventilate | 10 sec |
| press | 240 sec |

The pressed pads were cured in a muffle oven with a heating rate from 25°C to 200°C of 0.73 K/min and a holding time at 200°C of 4 h. Afterwards 0.3 mm of the cured pads were ground down. A cast iron disc was used (ATE 240122-0210.1) as disc. The application properties of the pads were investigated using AK-Master test (SAE J2522) and a block wear test.

### AK-Master test:

The AK-Master test was carried out with an inertia of 64.92 kgm² according to SAE J2522 on a Link 2800 dynamometer which has the technical data shown in Table 5.

**Table 5: Technical data of the Link 2800 dynamometer AK-Master test (SAE J2522).**

| | |
|---|---|
| **Types of dbp** | Pads for passenger cars and small trucks |
| **Nominal speed** | 5- 2.55 rpm/max. 220 km/h |
| **Torque** | 5940 Nm |
| **Inertia mechanical** | 18.5 - 148.5 kgm² |
| **Inertia electrical** | 4.9 - 245 kgm² |
| **Power** | 93 kW (125 HP) |
| **Braking pressure** | 1 - 200 bar |
| **Brake system** | VW Golf VI |

### Block wear test:

A block wear test was performed on a Link 2800M dynamometer with an inertia of 64.92 kgm² with 100 stops at 100°C with brake pressure 20 bar from 80 km/h to 5 km/h and afterwards 300 stops at each temperature (100°C, 200°C, 300°C, 400°C, 500°C) with 0.51 G from 100 km/h to 50 km/h.

### Characterization of the composition

The compositions according to the present invention were characterized in terms of XRD. The powder diffraction experiments were carried out on a PANalytical X'Pert PRO powder diffractometer with CuK_{α}-radiation and proportional counter. All measurements were performed in reflection geometry. For sample-preparation the backloading system from PANalytical were used. The powder diffractometric measurements were controlled and handled with the program suite Highscore Plus. Phase analyses were performed with a search-routine which refers to the PanICSD database. Additionally, Rietveld-analyses were performed using the Software HighScore Plus 4.1.

### Measurement parameters:

Incident beam path:
   0.04 rad Soller slit
   15 mm fixed incident beam mask
   Programmable divergence slit
Diffracted beam path:
   0.04 rad Soller slit
   Monochromator
   Programmable receiving slit (0.30 mm height)
   Fixed 2° anti-scatter slit
   Xe Proportional detector
Measure:
   10-80° 2Theta
   0.04° step
   5s counting time per step

### Results

### AK-Master tests:

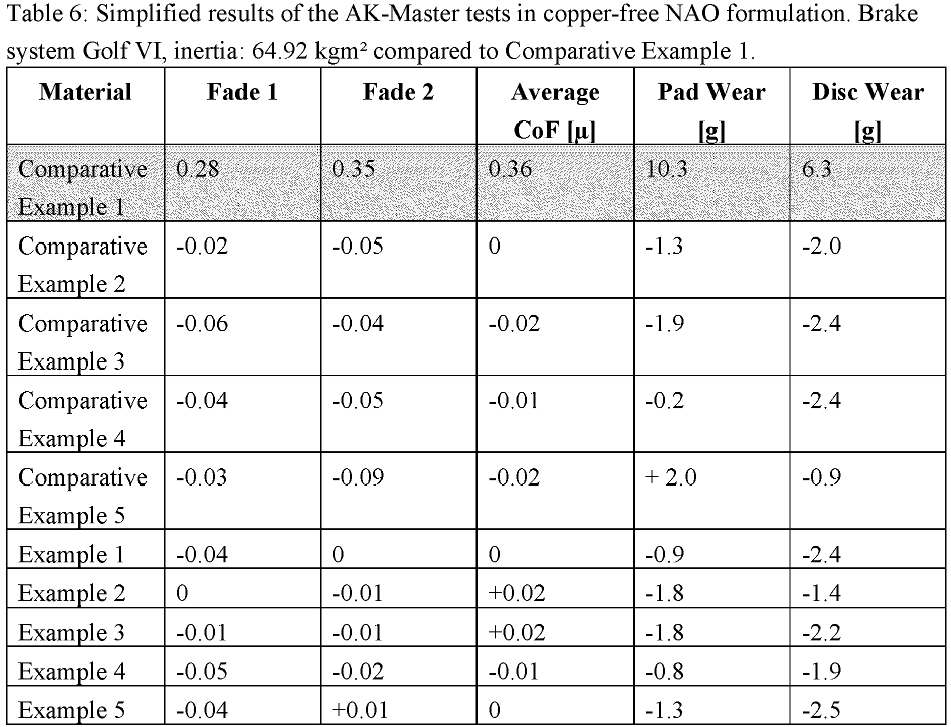

It is noted that higher values of the CoF and fade are preferred, wherein lower values of pad wear and disc wear are preferred indicating a reduced wear of the material.

The results in Table 6 show that the compositions according to the invention (Examples 1 to 5) in fade block 2 are comparable to tin sulfide (Comparative Example 1). Further surprisingly, the compositions according to the invention showed a significantly reduced pad wear and disc wear than tin sulfide. This is particularly advantageous, since tin-based lubricants are much more expensive than the raw materials of the compositions of the present invention.

The results also show that pure iron sulfide (Comparative Example 2) and zinc sulfide (Comparative Example 3) were less effective in terms of fade 2 than the examples related to the invention. Also, the composition according to Comparative Example 4, which has a similar atom ratio as the composition of Example 1, showed a reduced performance in terms of fade 2 and pad wear than the compositions according to the invention.

Surprisingly, the compositions of the present invention showed these advantages also compared with Comparative Example 5, indicated by a higher pad wear and a slightly reduced disc wear.

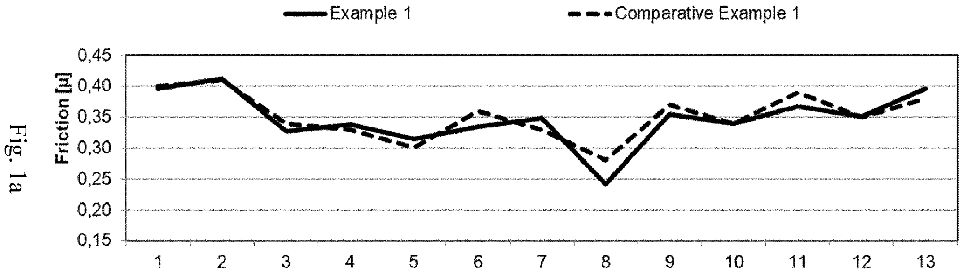

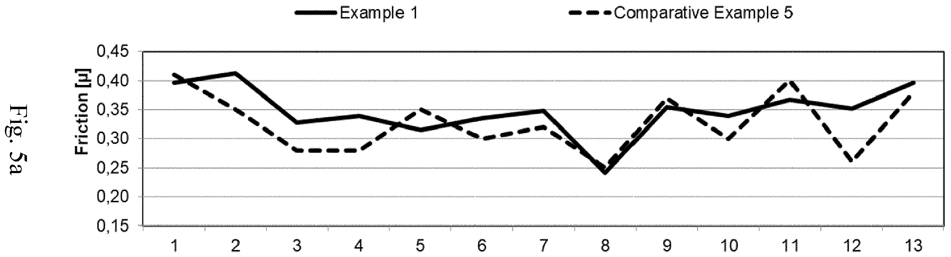

Further, AK-master tests revealed that the inventive composition according to Example 1 shows better behavior in the fade block 2 and better stability of CoF in the respective test blocks in comparison to Comparative Examples 1 to 5 (see Figs. 1a, 2a, 3a, 4a, and 5a).

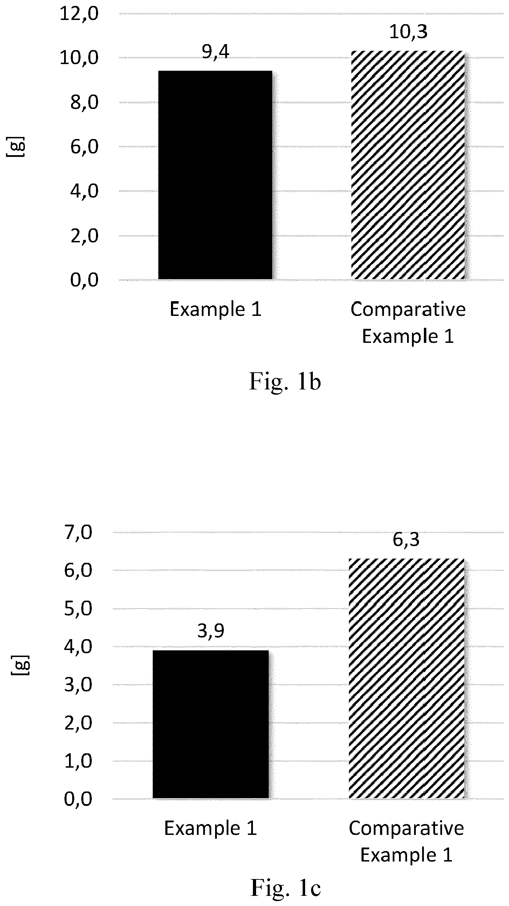

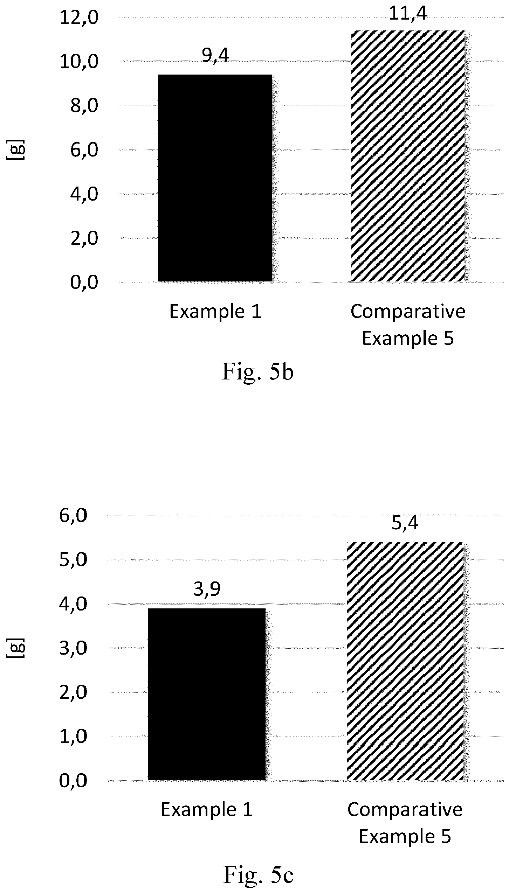

In addition to the simplified results of AK-master tests, as discussed herein, further detailed results regarding pad wear and disc wear of the respective Comparative Examples 1 to 5 are depicted in Figs. 1b, 1c, 2b, 2c, 3b, 3c, 4b, 4c, 5b, and 5c.

Figures 1a, 2a, 3a, 4a, 5a show some more measurement points of the AK-master test in a simplified way.

These measurement points are indicated in the figures by numbers. The testing conditions for each of these points is indicated below:
1: 30 bar, 80-30 km/h, operating µ, characteristic value 3
2: 10-80 bar, 120-80 km/h, speed, pressure, characteristic value 4.3
3: 10-80bar, 170-150 km/h, speed, pressure, characteristic value 4.5.
4. 30 bar, 80-30 km/h, operating µ, characteristic value 5
5: 40°C, cold application, characteristic value 6
6: 160-90 km/h, 100-5 km/h, motorway, characteristic value 7
7: 30 bar, 80-30 km/h, operating µ, characteristic value 8
8: Braking from 100 km/h to < 5 km/h, Fading 1, characteristic value 9
9: 30 bar, 80-30 km/h, operating µ, characteristic value 10
10: 500°C, 80-30 km/h, Temp./press., characteristic value 12
11: 80-30 km/h, operating µ, characteristic value 13.
12: Braking from100 km/h to < 5 km/h, fading 2, characteristic value 14.
13: 80-30 km/h, operating µ, characteristic value 15.

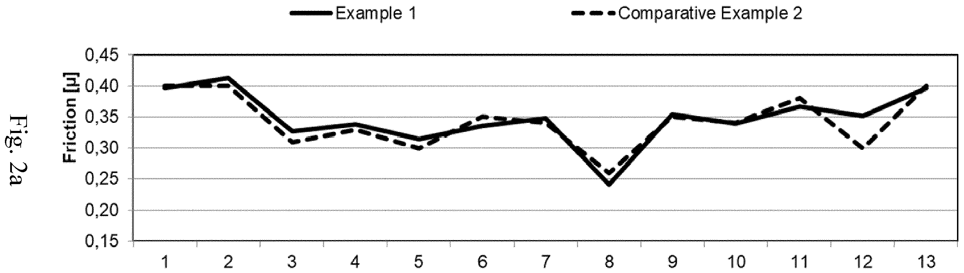

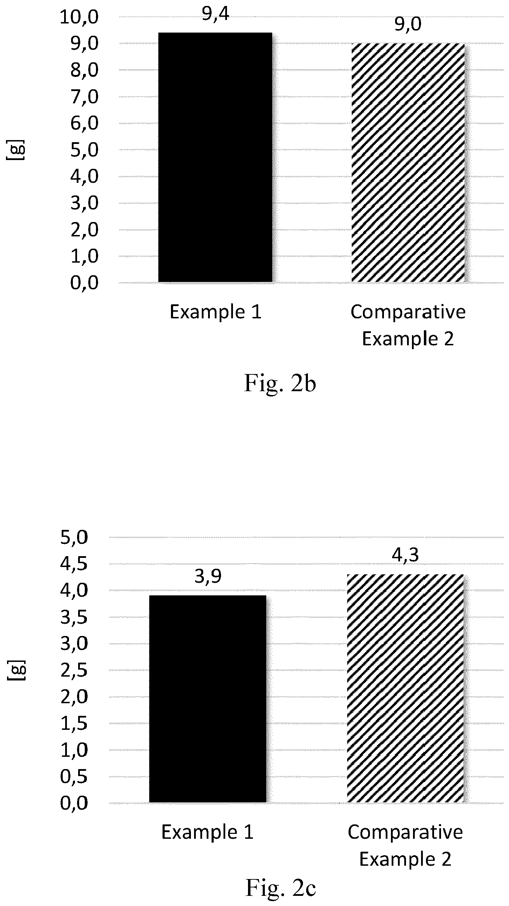

Further, the AK-Master tests revealed that the composition according to the invention (Example 1) showed a significant lower pad wear of up to 17% in comparison to the composition of Comparative Examples 1, 3, 4, and 5 (see Figs. 1b, 3b, 4b and 5b). Only the composition of Comparative Examples 2 showed comparable results in terms of pad wear (see Fig. 2b).

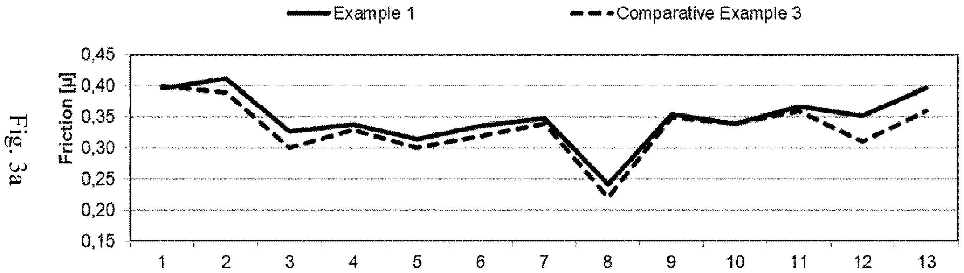

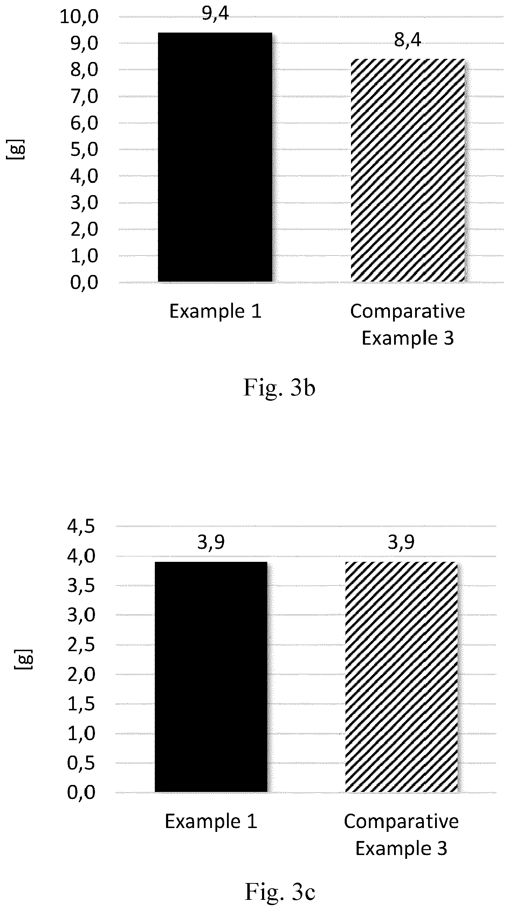

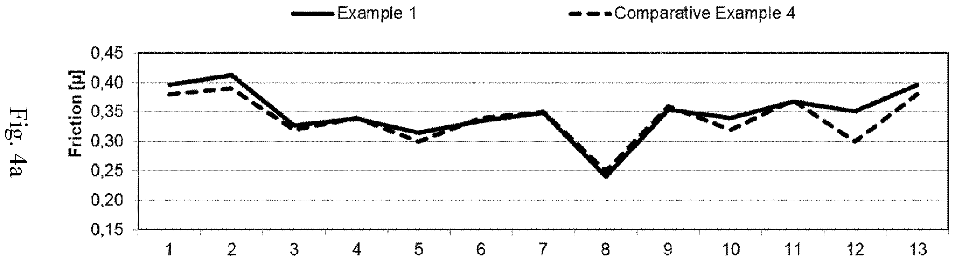

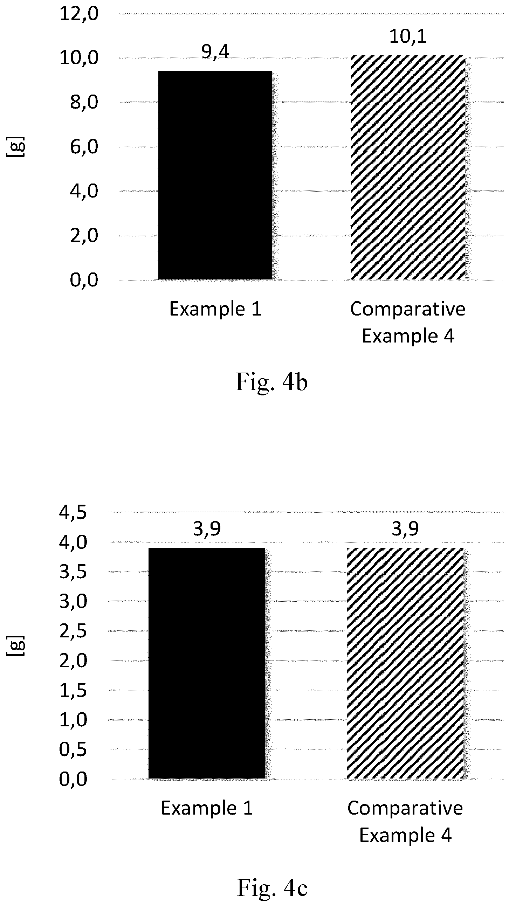

Regarding discs wear, the composition of Example 1 exhibited a significant lower wear (up to 38%) than the compositions of Comparative Examples 1, 2, and 5 (see Figs. 1c, 2c and 5c) and comparable results as Comparative Examples 3 and 4 (see Figs. 3c, 4c)

In summary, these results indicate a better brake performance compared to the compositions according to state-of the-art materials.

### XRD measurement:

The difference between the compositions of the present invention and Comparative Example 5 lies in the presence of at least one mixed crystalline phase between zinc, iron and sulfur. It is believed that the presence of such phase is the reason for a high performance of the inventive compositions, compared to other compositions known in the art. Examples 1, 2 and 3 contain two mixed crystalline phases, respectively.

In particular, XRD measurements confirmed that the inventive compositions contain mixed crystalline phases of Fe and S, and Fe and Zn and S in contrast to other metals sulfides, such as the composition of Comparative Example 5, as shown in Table 7.

**Table 7: Summarized results of XRD measurements. Values are in wt%.**

| **Phase** | **Composition** | **Example 1** | **Example 2** | **Example 3** | **Comparative Example 5** |
|---|---|---|---|---|---|
| Fe-Sphalerite cubic | Fe_{0.34}Zn_{0.66}S | 59.2 | | | |
| Fe-Sphalerite cubic | Fe_{0.372}Zn_{0.628}S | | 19.9 | 17.7 | |
| FeZnS hexagonal | Fe_{0.33}Zn_{0.67}S | 13.0 | 64.1 | 80.1 | |
| Troilite | FeS | 16.7 | | | |
| FeS | FeS | 11.1 | 15.0 | 2.1 | 24.3 |
| Sphalerite | ZnS | | | | 44.3 |
| Bismuthinite | Bi₂S3 | | | | 17.7 |
| Bismuth | Bi | | | | 9.5 |
| Other phases | | | 0.8 | 0.1 | 4.1 |

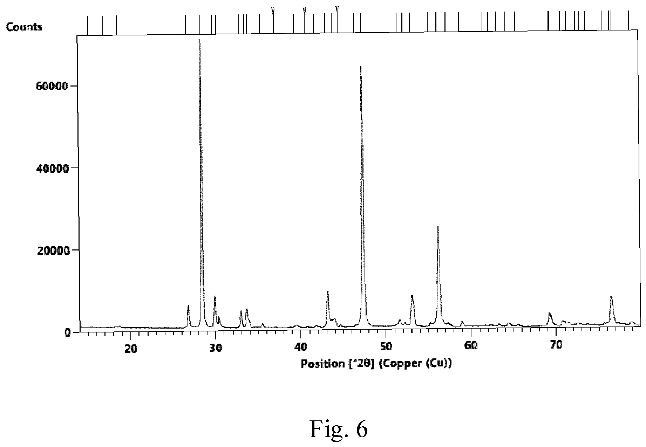

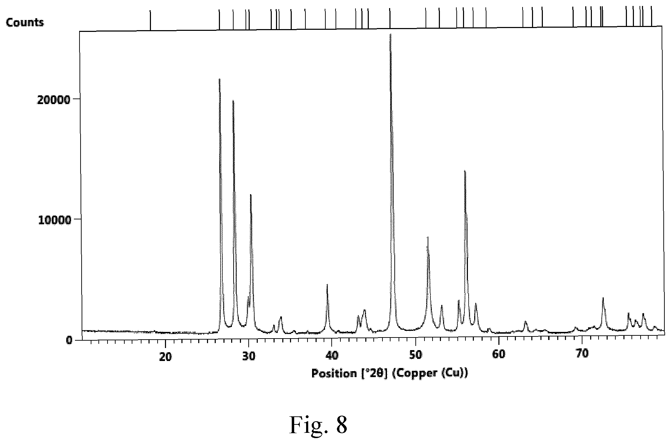

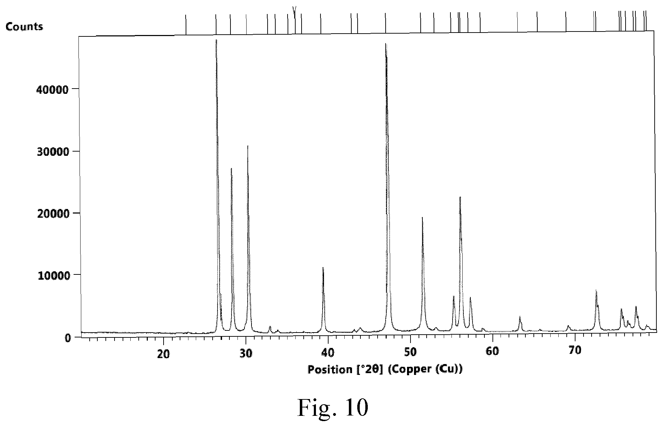

The XRD spectra of Examples 1, 2, 3 and Comparative Example 5 are shown in Figs. 6, 8, 10 and 12.

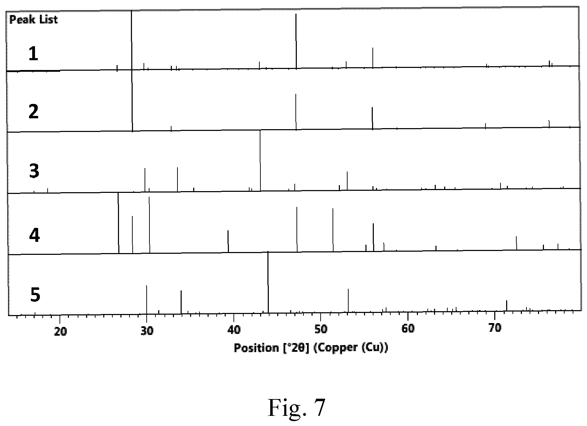

Figs. 7, 9, 11 and 13 show the characteristic peaks of crystalline phases of Fe and S, and Fe, Zn, and S as expected from the XRD database of each Example. The respective crystalline phases are indicated in the figures by numbers that are summarized in Tables 8 to 11.

The crystalline phases compared for Example 1 as shown in Fig. 7 are indicated in Table 8.

**Table 8**

| No. | XRD Database No. | Compound | Phase | Crystal structure | Lattice system |
|---|---|---|---|---|---|
| 1 | | Fe_{1.4}Zn_{0.6}S₂ (Exampe 1) | | | |
| 2 | 98-003-8514 | Fe_{0.34}S₁ Zn_{0.66} | Sphalerite (Fe-rich) | F-43 m | Cubic |
| 3 | 98-063-3296 | Fe₁S₁ | Troilite | P-62 c | Hexagonal |
| 4 | 98-063-3375 | Fe_{0.33}S₁ Zn_{0.67} | Iron Zinc Sulfide (0.33/0.67/1) | P 63 m c | Hexagonal |
| 5 | 98-005-1003 | Fe₁S₁ | Iron Sulfide | P-62 c | Hexagonal |

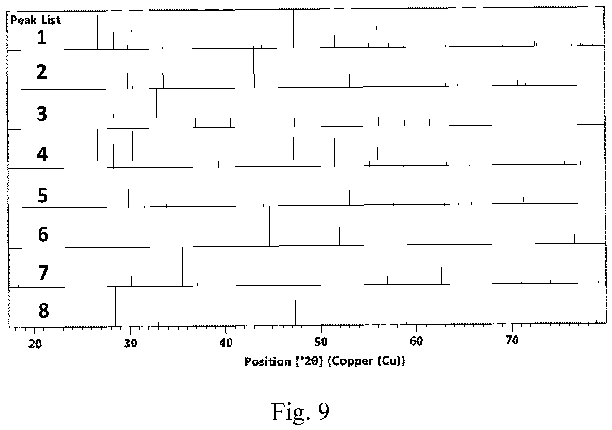

The crystalline phases compared for Example 2 as shown in Fig. 9 are indicated in Table 9.

**Table 9**

| No. | XRD Database No. | Compound | Phase | Crystal structure | Lattice system |
|---|---|---|---|---|---|
| 1 | | Fe_{1.05}Zn_{0.95}S₂ (Example 2) | | | |
| 2 | 98-005-3528 | Fe₁S₁ | Iron Sulfide | P63 m c | Hexagonal |
| 3 | 98-063-3254 | Fe₁S₁ | Pyrite | Pa-3 | Cubic |
| 4 | 98-063-3375 | Fe_{0.33}S₁ Zn_{0.67} | Iron Zinc Sulfide (0.33/0.67/1) | P63 m c | Hexagonal |
| 5 | 98-063-3265 | Fe₁S₁ | Iron Sulfide | P63/m m c | Hexagonal |
| 6 | 98-018-5730 | Fe₁ | Iron | Fm-3 m | Cubic |
| 7 | 98-002-8664 | Fe₃O₄ | Iron Diiron(III) Oxide | Fd-3 m | Cubic |
| 8 | 98-004-4365 | Fe_{0.372}S₁ Zn_{0.628} | Sphalerite (Fe-rich) | F-43 m | Cubic |

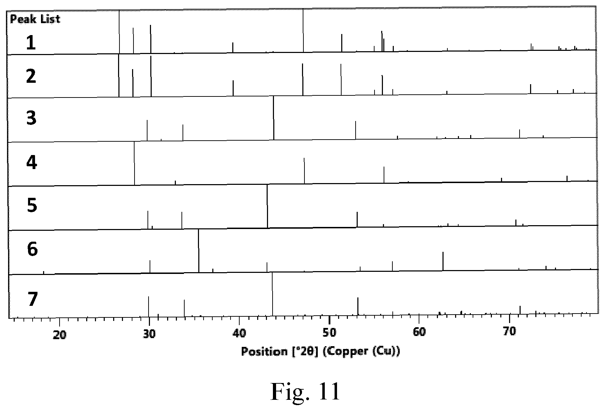

The crystalline phases compared for Example 3 as shown in Fig. 11 are indicated in Table 10.

**Table 10**

| No. | XRD Database No. | Compound | Phase | Crystal structure | Lattice system |
|---|---|---|---|---|---|
| 1 | | Fe_{0.64}Zn_{1.36}S₂ (Example 3) | | | |
| 2 | 98-063-3375 | Fe_{0.33}S₁ Zn_{0.67} | Iron Zinc Sulfide (0.33/0.67/1) | P63 m c | Hexagonal |
| 3 | 98-063-3265 | Fe₁S₁ | Iron Sulfide | P63/m mc | Hexagonal |
| 4 | 98-004-4365 | Fe_{0.372}S₁ Zn_{0.628} | Sphalerite (Fe-rich) | F-43 m | Cubic |
| 5 | 98-005-3528 | Fe₁S₁ | Iron Sulfide | P63 m c | Hexagonal |
| 6 | 98-002-8664 | Fe₃O₄ | Iron Diiron(III) Oxide | Fd-3 m | Cubic |
| 7 | 98-005-1001 | Fe₁S₁ | Iron Sulfide | P-62 c | Hexagonal |

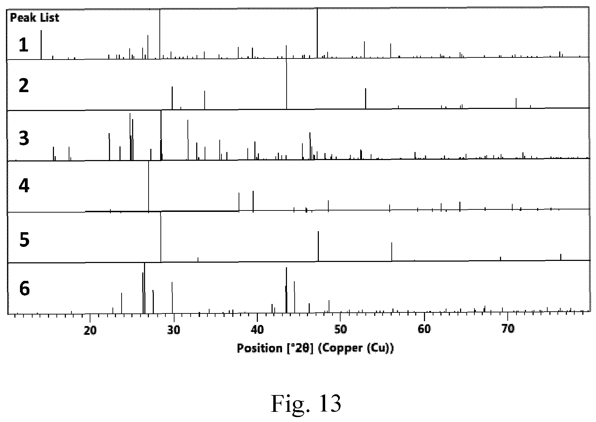

The crystalline phases compared for Comparative Example 5 as shown in Fig. 13 are indicated in Table 11.

**Table 11**

| No. | XRD Database No. | Compound | Phase | Crystal structure | Lattice system |
|---|---|---|---|---|---|
| 1 | | Fe_{0.6}Zn_{0.22}Bi_{0.12}S (Comparative Example 5) | | | |
| 2 | 98-005-3526 | Fe₁S₁ | Iron Sulfide | P63/m m c | Hexagonal |
| 3 | 98-008-9325 | Bi₂S₃ | Bismuthinite | Pn ma | Orthorhombic |
| 4 | 98-061-6527 | Bi₁ | Bismuth | R-3 m | Hexagonal |
| 5 | 98-016-8377 | S₁Zn₁ | Zinc Sulfide | F-43 m | Cubic |
| 6 | 98-019-6071 | Sb₇Zn₈ | Zinc Antimony (8.0/7) | P6/m m m | Hexagonal |

It can be seen by way of Figures 7, 9 and 11, that many of the peaks of the patterns of Examples 1, 2 and 3 (Figures 6, 8 and 10) correspond to known cubic and hexagonal phases of mixed FeZnS crystals (cubic Fe-Sphalerite in the form of Fe_{0.34} S₁ Zn_{0.66} or Fe_{0.372} S₁ Zn_{0.628}, and hexagonal Fe_{0.33} S₁ Zn_{0.67}).

With regard to the cubic Sphalerite phase in the form of Fe_{0.372}Zn_{0.628}S (Fig. 9, No. 8, Fig. 11, No. 4), a peak typical for this phase can be detected both in Examples 2 and 3 at position 69 (^{∗}2Θ).

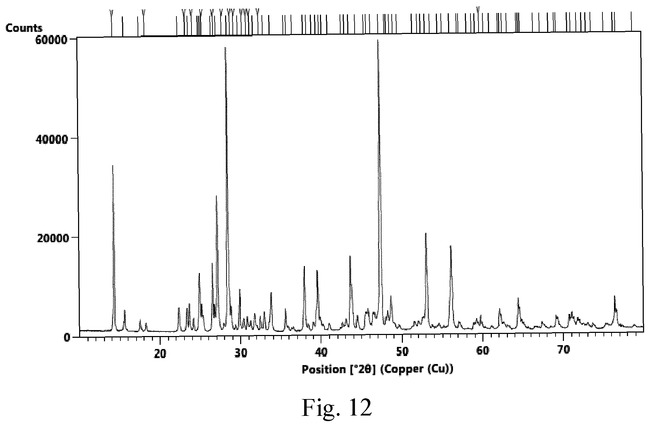

In contrast, it can be seen in Figs. 12 and 13 that the composition of Comparative Example 5 showed no peaks that would correspond to a mixed crystalline phase.

### Block wear test:

In block wear tests the advantage of the compositions of the present invention compared to state-of the art materials could be verified.

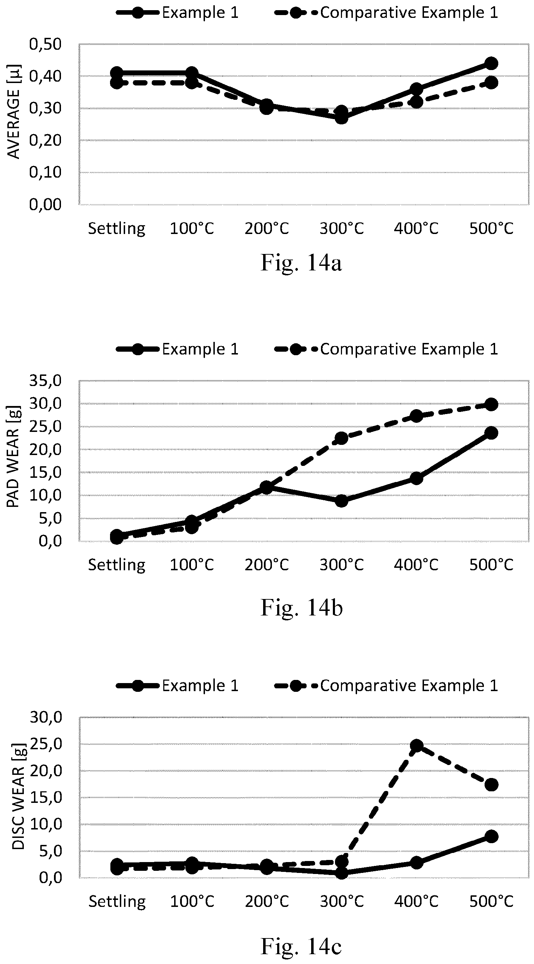

Fig. 14a shows that the average CoF (µ) of Example 1 is in the same range as Comparative Example 1 at temperatures up to 300°C. Above 400°C, the CoF of the pad with the composition of Example 1 is increasing more than for Comparative Example 1.

Fig. 14b shows that the pad wear shows clear differences. Up to 200°C, the wear of both materials is at a similar level. But from 300°C onwards, the composition according to Example 1 shows significant advantages compared to Comparative Example 1. Over the entire test, a 33% reduction in pad wear was observed.

In the Disc Wear range, the curves are also very similar up to 200°C, as shown in Fig. 14c. While the wear of tin sulfide increases significantly from 400°C, the wear of the composition according to Example 1 is significantly lower. Over the entire cycle, the disc wear was reduced by 64%.

## Claims

1. Use of a composition of formula I
Fe₂₋ₐZnₐS_{b} I
wherein a is a number within the range of 0.2 ≤ a ≤ 1.8, and
b is a number within the range of 1.8 ≤ b ≤ 2.2, preferably within the range of 1.9 ≤ b ≤ 2.1, most preferably b=2,
said composition containing at least one mixed crystalline phase of Fe, Zn and S,
as a lubricant.

2. Use of a composition according to claim 1, **characterized in that** a is a number within the range of 0.4 ≤ a ≤ 1.6, preferably within the range of 0.6 ≤ a ≤ 1.4.

3. Use of a composition according to claim 1 or 2, **characterized by** containing at least two different mixed crystalline phases of Fe, Zn and S.

4. Use of a composition according to any of the preceding claims, **characterized in that** the composition contains a cubic crystalline phase of Fe, Zn and S, a hexagonal crystalline phase of Fe, Zn and S, or both.

5. Use of a composition according to any of the preceding claims, containing in addition at least one crystalline phase selected from the group consisting of iron sulfides and mixtures thereof.

6. Use of a composition according to any of the preceding claims, **characterized by** having the following composition:
Fe_{1.4}Zn_{0.6}S₂
Fe_{1,05}Zn_{0,95}S₂
Fe_{0.64}Zn_{1.36}S₂,
or by being a mixture of one or more of the compositions above.

7. Use of a composition according to any of the preceding claims, **characterized in that** the composition is present together with one or more additives selected from the group consisting of fluorides, such as CaF₂, MgO, and CaSO₃.

8. Use of a composition according to any of the preceding claims, **characterized in that** the composition is present together with one or more other lubricants, such as phosphates, such as Tricalciumphosphate (TCP), graphite, and metal sulfides.

9. A composition of formula I
Fe₂₋ₐZnₐS_{b} I
wherein a is a number within the range of 0.2 ≤ a ≤ 1.8, and
b is a number within the range of 1.8 ≤ b ≤ 2.2, preferably within the range of 1.9 ≤ b ≤ 2.1, most preferably b=2,
said composition containing at least two different mixed crystalline phases of Fe, Zn and S.

10. Composition according to claim 9, **characterized in that** the composition contains both a cubic crystalline phase of Fe, Zn and S and a hexagonal crystalline phase of Fe, Zn and S.

11. Composition according to claim 9 or 10, **characterized in that** a is a number within the range of 0.4 ≤ a ≤ 1.6, preferably within the range of 0.6 ≤ a ≤ 1.4.

12. Composition according to any of claims 9 to 11, **characterized in that** the composition contains in addition at least one crystalline phase selected from the group consisting of iron sulfides and mixtures thereof.

13. Composition according to any of claims 9 to 12, **characterized by** having the following composition:
Fe_{1.4}Zn_{0.6}S₂
Fe_{1,05}Zn_{0,95}S₂
Fe_{0.64}Zn_{1.36}S₂,
or by being a mixture of one or more of the compositions above.

14. Process for producing a composition used according to any of claims 1 to 8 or a composition according to claims 9 to 13, comprising the steps of
- mixing Fe, Zn and S in elemental form in the desired ratio to obtain the mixture of formula I and
- thermally synthesizing said mixture under vacuum.
